# EUROPÄISCHE PATENTSCHRIFT

(11) **EP 1 435 870 B1**
(45) Veröffentlichungstag und Bekanntmachung des Hinweises auf die Patenterteilung: **31.12.2008**
(21) Anmeldenummer: 03740306.0
(22) Anmeldetag: 23.06.2003
(51) Int. Cl.: A61C 5/06, A61C 13/03, A61C 13/083, B65D 83/14

(54) **AUSTRAGVORRICHTUNG FÜR DENTALE ZWECKE**
DENTAL APPLICATION DEVICE
DISPOSITIF DE DIFFUSION POUR APPLICATIONS DENTAIRES

(30) Priorität: 21.06.2002 DE 10228498
(43) Veröffentlichungstag der Anmeldung: 14.07.2004
(73) Patentinhaber: Wieland Dental Ceramics GmbH, 61191 Rosbach-Rodheim (DE)
(72) Erfinder: ASSMANN, Steffen, 61169 Friedberg (DE); APPEL, Peter, 61200 Wölfersheim (DE); ARMBRUST, Reinhard, 61118 Bad Vilbel (DE)
(74) Vertreter: Patentanwälte Ruff, Wilhelm, Beier, Dauster & Partner
(86) Internationale Anmeldenummer: PCT/EP2003/006577
(87) Internationale Veröffentlichungsnummer: WO 2004/000154

(56) Entgegenhaltungen:
- EP-A- 0 836 845
- WO-A-99/50480
- DE-A- 10 022 559
- DE-A- 19 801 534

## Beschreibung

Die Erfindung betrifft eine Austragvorrichtung für dentale Zwecke, die mit einem dentalen Keramikmaterial in Form einer Suspension befüllt ist. Sie betrifft ferner ein Verfahren zum Aufbringen eines dentalen Keramikmaterials in Form einer Suspension.

Zahnersatz, wie beispielsweise Zahnkronen oder Zahnbrücken, wird aus einem Dentalgerüst, häufig einem Metallgerüst, angefertigt. Dieses Gerüst wird dann mit unterschiedlichen Materialien, insbesondere Keramikmaterialien oder Kunststoffmaterialien, verblendet. Besonders zu nennen sind hier die mit Keramik verblendeten Restaurationen, die den medizinischen und ästhetischen Bedürfnissen in hohem Maße Rechnung tragen.

In den letztgenannten Fällen wird üblicherweise ein mehrschichtiger Aufbau des keramischen Verblendmaterials auf dem beispielsweise metallischen oder keramischen Grundgerüst vorgenommen. Als erste Schicht oder als eine der ersten Schichten wird dabei häufig eine sogenannte Opakerschicht aus einem dentalen Opaker auf das Gerüst aufgetragen. Dieser Opaker hat die Aufgabe, die Farbe des Metalls oder der Keramik, die das Grundgerüst bilden, abzudecken. Auf diese Opakerschicht wird dann eine oder mehrere weitere Schichten aus Keramikmaterial aufgebracht, die als Dentinschicht(en) bezeichnet werden. Über diesen Schichten werden dann noch sogenannte Schneideschichten und gegebenenfalls noch Glasurschichten aus keramischen Materialien aufgebracht werden.

Die genannten Keramikmaterialien werden von den entsprechenden Herstellern meist in Form von Pulvern und im Fall der Opaker auch als Pasten angeboten. Der Zahntechniker stellt dann aus diesen Ausgangsmaterialien, insbesondere aus den Pulvern, mit Hilfe von geeigneten Lösungsmitteln endgültig gebrauchsfertige Mischungen her.

Eine Austragvorrichtung, die bereits mit gebrauchsfertigem Keramikmaterial befüllt ist, ist aus der DE-A-19801534 bekannt. Diese besteht aus einem Aussenrohr, in das ein elastisches Innenrohr eingelegt ist, wobei das Innenrohr das Keramikmaterial enthält.

Die genannten Vorgehensweisen haben einige Nachteile. Im Falle von Keramikpasten muß der Zahntechniker aufgrund der enthaltenen schwerflüchtigen Lösungsmittelbestandteile lange Vortrocknungszeiten in Kauf nehmen. Im Falle der Keramikpulver liegt dem Zahntechniker kein gebrauchsfertiges Produkt vor, so daß für die Herstellung dieses gebrauchsfertigen Produkts Zeit aufgewendet werden muß. Zum anderen ist die Herstellung des gebrauchsfertigen Produkts für jeden einzelnen Anwendungsfall eine ständige Quelle möglicher Fehler, wenn beispielsweise die vom Hersteller gemachten Vorgaben aus unterschiedlichen Gründen nicht eingehalten werden oder eingehalten werden können.

Dementsprechend stellt sich die Erfindung die Aufgabe, die oben genannten Nachteile zu beseitigen und dentale Keramikmaterialien in gebrauchsfertigem Zustand bereitzustellen.

Diese Aufgabe wird gelöst durch die Austragvorrichtung gemäß Anspruch 1. Gegenstand der Erfindung ist auch das Verfahren gemäß Anspruch 11. Bevorzugte Ausführungsformen bestimmter Erfindungsgegenstände sind in den Ansprüchen 2 bis 10, 12 und 13 genannt. Der Wortlaut sämtlicher Ansprüche wird hiermit durch Bezugnahme zum Inhalt dieser Beschreibung gemacht.

Erfindungsgemäß wird eine Austragvorrichtung für dentale Zwecke in Form einer Spraydose bereitgestellt, wobie die Spraydose zusätzlich zu dem dentalen Keramikmaterial mit einem gasförmigen Treibmittel befüllt ist. Bei dem Keramikmaterial handelt es sich vorzugsweise um einen sogenannten dentalen Opaker. Das Keramikmaterial liegt erfindungsgemäß in gebrauchsfertiger, vorgemischter Form vor, wodurch die eingangs beschriebenen Nachteile des Standes der Technik vermieden werden.

Der Begriff "Suspension" soll erfindungsgemäß sehr umfassend verstanden werden. Dieser-Begriff soll all die Fälle umfassen, bei denen das dentale Keramikmaterial zusammen mit einem anorganischen oder organischen Lösungsmittel vorliegt. Dementsprechend kann die Befüllung der Austragvorrichtung erfindungsgemäß beispielsweise mit einer (niedrig-viskosen) Suspension (hoher Lösungsmittelgehalt) oder mit einer (hoch-viskosen) Paste oder dergleichen (niedriger Lösungsmittelgehalt) erfolgen. Hierbei ist auch zu berücksichtigen, daß die eigentliche Befüllung der Austragvorrichtung im Falle der Erfindung nicht nur von der Suspension selbst, sondern auch von dem zum Austrag des Keramikmaterials notwendigen Treibmittel (üblicherweise mindestens ein Gas) gebildet wird. Das Keramikmaterial wird so letztlich dispergiert, vorzugsweise als Aerosol ausgetragen. Dies wird im folgenden noch näher erläutert.

Grundsätzlich können bei der Erfindung, insbesondere zur Herstellung der Suspension die unterschiedlichsten Lösungsmittel verwendet werden. Es ist jedoch bevorzugt, wenn es sich hierbei um sogenannte polare Lösungsmittel handelt, mit deren Hilfe eine besonders gute Verteilung der Keramikpartikel erreicht werden kann. Hier können beispielsweise die Ketone oder die Ether als Lösungsmittel erwähnt werden. Innerhalb der Gruppe der polaren Lösungsmittel sind insbesondere die Alkohole hervorzuheben, wobei es sich hier um einwertige oder mehrwertige Alkohole handeln kann. Besonders bevorzugt sind hier die sogenannten Alkanole, und bei diesen insbesondere das Ethanol.

Erfindungsgemäß ist die Austragvorrichtung vorzugsweise mit einem dentalen Keramikmaterial befüllt, das in pastöser, d. h. hoch-viskoser Form vorliegt. Dieses pastenförmige Material aus den Keramikpartikeln und dem Lösungsmittel bildet dann zusammen mit dem üblicherweise gasförmigen Treibmittel den Inhalt und damit die eigentliche Befüllung der Austragvorrichtung, beispielsweise der Spraydose.

Das Verhältnis der Menge an Keramikmaterial (Keramikpartikel) zum Lösungsmittel, das in der Suspension (Paste) enthalten ist, beträgt vorzugsweise zwischen 1:4 bis 4:1 (Gewichtsteile). Bevorzugte Mengenverhältnisse betragen 2:3 bis 3:2. Innerhalb dieses zuletzt genannten Bereiches sind Mengenverhältnisse zwischen 1:1 bis 3:2 bevorzugt.

Die Partikelgröße der verwendeten Keramikteilchen hängt davon ab, für welchen Zweck die Keramikbeschichtung aufgebracht werden soll. Keramische Opakerschichten werden üblicherweise aus Keramikteilchen mit geringerer Partikelgröße als die sogenannten Dentinschichten hergestellt. Die Erfindung ist vorzugsweise zum Aufbringen von Opakerschichten geeignet. Solche Opakerschichten werden üblicherweise mit einer vergleichsweise geringen Schichtdicke (50 µm bis 200 µm, vorzugsweise 70 µm bis 150 µm) auf das Dentalgerüst aufgebracht. Gleiches gilt auch für die gegebenenfalls zuletzt aufgebrachten keramischen Glasurschichten. Die keramischen Dentinschichten werden demgegenüber meist in beträchtlich größeren, ungleichmäßigen Schichtdicken (bis zu mehreren Millimetern) aufgebracht, was die Verwendung der Erfindung für solche Dentinschichten zwar grundsätzlich möglich, aber häufig nicht erforderlich macht.

Dementsprechend liegen die Partikelgrößen der für die Realisierung der Erfindung verwendeten Keramikmaterialien (d₅₀-Wert) vorzugsweise unterhalb von 80 µm, und noch weiter bevorzugt unterhalb von 30 µm. Weiter bevorzugte Partikelgrößen der verwendeten Keramikmaterialien (d₅₀-Wert) liegen zwischen 2 µm und 20 µm, insbesondere zwischen 3 µm und 8 µm.

Wie bereits erwähnt, kann die eigentliche Befüllung der erfindungsgemäßen Austragvorrichtung auch als die Mischung zwischen dem dentalen Keramikmaterial, d. h. von der niedrig-viskosen Suspension bis zu der gegebenenfalls pastösen Suspension und dem zum Austrag dieses Materials erforderlichen Treibmittel (Treibgas) definiert werden. Das Mengen- oder Volumenverhältnis zwischen Keramikmaterial (Suspension/Paste) und Treibgas kann erfindungsgemäß je nach verwendetem Keramikmaterial oder je nach erwünschtem Verwendungszweck eingestellt werden. Das Volumenverhältnis von Keramikmaterial (beispielsweise Paste) zu Treibgas liegt vorzugsweise zwischen 1:5 bis 5:1, vorzugsweise zwischen 1:1 bis 5:1. Innerhalb des letztgenannten Bereiches sind Volumenverhältnisse von Keramikmaterial zu Treibgas zwischen 1:1 bis 2:1 weiter bevorzugt.

Abgesehen von der erfindungsgemäß neu ausgestalteten Befüllung ist der übrige Aufbau der erfindungsgemäßen Austragvorrichtung weitgehend aus dem Stand der Technik bekannt. Wie bereits erwähnt, handelt es sich hier um übliche Spraydosen, wie sie auch zum Austrag von Lacken und dergleichen verwendet werden. Vereinfacht gesagt, bestehen solche Austragvorrichtungen aus einem Behältnis und einem sogenannten Sprühkopf.

Dabei kann die Sprühdose eine entsprechende, beliebig wählbare Größe aufweisen, die vorzugsweise häufig ein Volumen von ca. 50 ml bis 100 ml aufnehmen kann. Derartige Behältnisse können an den Innenseiten entweder unbeschichtet oder mit Lacken oder Metallschichten beschichtet sein. Die Behältnisse enthalten häufig auch Kugeln, vorzugsweise Glaskugeln, mit deren Hilfe die Befüllung vor Betätigen des Sprühkopfes aufgeschüttelt werden kann. Solche Kugeln/Glaskugeln besitzen häufig Durchmesser zwischen 5 mm und 7 mm.

Der Sprühkopf umfaßt ein Austragventil, das in üblicher Weise nach Art einer Düse konstruiert ist. Hierbei kann es sich um Düsen aus Kunststoff oder auch aus Metall, beispielsweise Messing, handeln. Diese Düsen definieren auch den Austragwinkel für das dentale Keramikmaterial, wie er im Zusammenhang mit dem erfindungsgemäßen Verfahren noch diskutiert wird.
Weitere Ausführungen zum Sprühkopf selbst erübrigen sich, da entsprechende Ausgestaltungen aus dem Stand der Technik bekannt sind. Ein solcher Sprühkopf besteht beispielsweise aus einem Gehäuse, in das ein in das Behältnis reichendes Steigrohr mündet. Das Gehäuse des Sprühkopfs umfaßt eine Feder, die durch Druck auf ein kolbenartiges Element die Düse selbst verschließt. Durch Betätigung eines entsprechenden Betätigungselements wird die Düse/das Ventil gegen den Federdruck geöffnet, und die Befüllung im Behältnis kann über einen entsprechenden Zeitraum durch die Düse entweichen. Dabei ist der Sprühkopf selbst gegenüber dem Behältnis durch entsprechende Dichtungselemente gegen einen erwünschten Austritt der Befüllung abgedichtet.
Als Treibmittel/Treibgas für die erfindungsgemäße Austragvorrichtung können grundsätzlich alle aus dem Stand der Technik bekannten Stoffe/ Gase verwendet werden. Hier kann es sich beispielsweise um Ether (Dimethylether), Stickstoff, Druckluft, Kohlendioxid und dergleichen handeln. Als bevorzugte Treibgase finden Kohlenwasserstoffe Verwendung, beispielsweise ein Gemisch aus Propan und Butan. Alle diese Gase stehen üblicherweise unter einem Druck zwischen 1 und 4 bar, wobei Drucke zwischen 2 und 3 bar bevorzugt sind.

Wie bereits erläutert, handelt es sich bei dem dentalen Keramikmaterial vorzugsweise um einen sogenannten dentalen Opaker. Bezüglich der besonderen bevorzugten Merkmale des dentalen Keramikmaterials kann hier auf die bisherigen Ausführungen ausdrücklich Bezug genommen und verwiesen werden.

Das erfindungsgemäße Verfahren zum Aufbringen eines dentalen Keramikmaterials in Form einer Suspension auf einen Untergrund, insbesondere die Oberfläche einer dentalen Gerüststruktur, ist dadurch gekennzeichnet, daß mit Hilfe der genannten Austragvorrichtung/Spraydose auf die entsprechende Oberfläche aufgebracht wird. Diese Oberfläche kann gegebenenfalls in üblicher Weise vorbehandelt sein, wie dies dem Fachmann bekannt ist, beispielsweise durch Abstrahlen mit Keramikpartikeln.

Bei bevorzugten Ausführungsformen des erfindungsgemäßen Verfahrens erfolgt der Austrag des dentalen Keramikmaterials über einen Sprühstrahl mit kleinem Austragwinkel (Öffnungswinkel). Diese Winkel betragen vorzugsweise < 20°, insbesondere zwischen 5° und 20°.

### Beispiel

Eine übliche, beispielsweise für das Aufbringen von Lacken bekannte, Spraydose wird mit einer Mischung/Suspension eines handelsüblichen Opakers (Produkt IMAGINE REFLEX der Anmelderin) in Ethanol befüllt. Dies geschieht wie folgt.

56 Gew.-% des Opakers (eine getrübte Silikatglaskeramik) wird mit 44 Gew.-% Ethanol zu einer Paste vermischt. 40,5 g (entspricht 30 ml) dieser Paste werden im Behältnis einer handelsüblichen' Spraydose vorgelegt, und dieses Behältnis wird in üblicher Weise unter Aufbringen des Sprühkopfs verschlossen. Anschließend werden in die Spraydose 11,5 g eines Propan-Butan-Treibgasgemisches (entspricht ca. 20 ml) durch den Sprühkopf unter Druckaufbau (2,7 bar) eingebracht. Dies entspricht einem Volumenverhältnis Paste:Treibgas von 3:2.

Nach Aufschütteln der Spraydose vor Gebrauch wird die Oberfläche eines mit üblichen Verfahrensschritten hergestellten dentalen Metallgerüsts aus einer Entfernung von ca. 2 bis ca. 3 cm angesprüht. Man erhält durch den sehr feinen Austrag mit einem Austragwinkel von ca. 5° bis 10° eine gleichmäßig deckende, dünne Opakerschicht (Schichtdicke ca. 100 µm) auf dem Gerüst. Durch das sofortige Verdunsten des Treibgases sowie des Lösungsmittels erhält man unmittelbar eine trockene, festhaftende und standfeste Schicht. Das bisher notwendige Vortrocknen eines aufgebrachten Opakers vor dem eigentlichen Brennvorgang in einem Keramikofen entfällt weitgehend. Die erhaltene Opakerschicht erfüllt sämtliche Anforderungen, die üblicherweise vom Zahntechniker an diese Schichten gestellt werden.

## Patentansprüche

1. Austragvorrichtung für dentale Zwecke, die mit einem dentalen Keramikmaterial in Form einer Suspension befüllt ist, **dadurch gekennzeichnet, daß** es sich bei der Austragvorrichtung um eine Spraydose handelt, die zusätzlich mit einem gasförmigen Treibmittel befüllt ist.

2. Austragvorrichtung nach Anspruch 1, **dadurch gekennzeichnet, daß** es sich bei dem Keramikmaterial um einen dentalen Opaker handelt.

3. Austragvorrichtung nach Anspruch 1 oder Anspruch 2, **dadurch gekennzeichnet, daß** die Suspension mindestens ein vorzugsweise polares Lösungsmittel enthält.

4. Austragvorrichtung nach Anspruch 3, **dadurch gekennzeichnet, daß** es sich bei dem polaren Lösungsmittel um mindestens einen Alkohol, vorzugsweise um Ethanol, handelt.

5. Austragvorrichtung nach einem der vorhergehenden Ansprüche, **dadurch gekennzeichnet, daß** das Keramikmaterial als pastöses Material in die Austragvorrichtung eingebracht ist.

6. Austragvorrichtung nach Anspruch 5, **dadurch gekennzeichnet, daß** das Mengenverhältnis von Keramikpulver zu Lösungsmittel im pastösen Material zwischen 1:4 bis 4:1, vorzugsweise zwischen 2:3 bis 3:2 beträgt.

7. Austragvorrichtung nach Anspruch 6, **dadurch gekennzeichnet, daß** das Mengenverhältnis von Keramikpulver zu Lösungsmittel im pastösem Material zwischen 1:1 bis 3:2 beträgt.

8. Austragvorrichtung nach einem der vorhergehenden Ansprüche, insbesondere nach einem der Ansprüche 5 bis, 7, **dadurch gekennzeichnet, daß** das Keramikpulver eine mittlere Teilchengröße von < 80 µm, vorzugsweise < 30 µm, besitzt.

9. Austragvorrichtung nach Anspruch 8, **dadurch gekennzeichnet, daß** die mittlere Teilchengröße zwischen 2 µm und 20 µm, vorzugsweise zwischen 3 µm und 8 µm, beträgt.

10. Austragvorrichtung nach einem der vorhergehenden Ansprüche, insbesondere nach einem der Ansprüche 5 bis 9, **dadurch gekennzeichnet, daß** das Volumenverhältnis von Keramikmaterial zu gasförmigem Treibmittel zwischen 1:5 bis 5:1, vorzugsweise zwischen 1:1 bis 5:1, insbesondere zwischen 1:1 bis 2:1, beträgt.

11. Verfahren zum Aufbringen eines dentalen Keramikmaterials in Form einer Suspension; vorzugsweise eines dentalen Opakers, auf einen Untergrund, insbesondere auf ein gegebenenfalls vorbehandeltes Dentalgerüst, **dadurch gekennzeichnet, daß** das Keramikmaterial mit Hilfe einer Spraydose aufgebracht wird.

12. Verfahren nach Anspruch 11, **dadurch gekennzeichnet, daß** der Austrag des Keramikmaterials über einen Sprühstrahl mit kleinem Austragwinkel erfolgt, wobei der Austragwinkel < 20°, vorzugsweise zwischen 5° und 20°, beträgt.

13. Verfahren nach einem der Ansprüche 11 oder 12, **dadurch gekennzeichnet, daß** es sich beim Dentalgerüst um ein Metallgerüst handelt.

## Claims

1. Discharge device for dental purposes, which is filled with a dental ceramic material in the form of a suspension, **characterized in that** the discharge device is a spray can which is additionally filled with a gaseous propellant.

2. Discharge device according to Claim 1, **characterized in that** the ceramic material is a dental opaque.

3. Discharge device according to Claim 1 or Claim 2, **characterized in that** the suspension contains at least one, preferably polar, solvent.

4. Discharge device according to Claim 3, **characterized in that** the polar solvent is at least one alcohol, preferably ethanol.

5. Discharge device according to one of the preceding claims, **characterized in that** the ceramic material is introduced into the discharge device as a pasty material.

6. Discharge device according to Claim 5, **characterized in that** the quantitative ratio of ceramic powder to solvent in the pasty material is between 1:4 and 4:1, preferably between 2:3 and 3:2.

7. Discharge device according to Claim 6, **characterized in that** the quantitative ratio of ceramic powder to solvent in the pasty material is between 1:1 and 3:2.

8. Discharge device according to one of the preceding claims, in particular according to one of Claims 5 to 7, **characterized in that** the ceramic powder has a mean particle size of < 80 µm, preferably < 30 µm.

9. Discharge device according to Claim 8, **characterized in that** the mean particle size is between 2 µm and 20 µm, preferably between 3 µm and 8 µm.

10. Discharge device according to one of the preceding claims, in particular according to one of Claims 5 to 9, **characterized in that** the volumetric ratio of ceramic material to gaseous propellant is between 1:5 and 5:1, preferably between 1:1 and 5:1, in particular between 1:1 and 2:1.

11. Method for applying a dental ceramic material in the form of a suspension, preferably a dental opaque, to a base, in particular to an optionally pretreated dental frame, **characterized in that** the ceramic material is applied, with the aid of a spray can.

12. Method according to Claim 11, **characterized in that** the ceramic material is discharged via a spray jet with a small discharge angle, the discharge angle being < 20°, preferably between 5° and 20°.

13. Method according to one of Claims 11 or 12, **characterized in that** the dental frame is a metal frame.

## Revendications

1. Dispositif d'application dentaire, rempli d'un matériau céramique dentaire en forme de suspension **caractérisé en ce que**
le dispositif d'application est une bombe de pulvérisation, qui est rempli de plus d'un agent propulseur gazeux.

2. Dispositif d'application selon la revendication 1, **caractérisé en ce que** le matériau céramique dentaire est un matériau dentaire opaque.

3. Dispositif d'application selon la revendication 1 ou la revendication 2, **caractérisé en ce que** la suspension contient au moins un solvant, de préférence polaire.

4. Dispositif d'application selon la revendication 3, **caractérisé en ce que** le solvant polaire est au moins un alcool, de préférence l'éthanol.

5. Dispositif d'application selon l'une des revendications précédentes, **caractérisé en ce que** le matériau céramique est placé dans le dispositif d'application sous la forme d'un matériau pâteux.

6. Dispositif d'application selon la revendication 5, **caractérisé en ce que** le rapport entre la quantité de poudre céramique et la quantité de solvant du matériau pâteux est compris entre 1 : 4 et 4 : 1 et de préférence entre 2 : 3 et 3 : 2.

7. Dispositif d'application selon la revendication 6, **caractérisé en ce que** le rapport entre la quantité de poudre céramique et la quantité de solvant du matériau pâteux est compris entre 1 : 1 et 3 : 2.

8. Dispositif d'application selon l'une des revendications précédentes et en particulier selon l'une des revendications 5 à 7, **caractérisé en ce que** les particules de la poudre céramique ont une taille moyenne < 80 µm et de préférence < 30 µm.

9. Dispositif d'application selon la revendication 8, **caractérisé en ce que** la taille moyenne des particules est comprise entre 2 µm et 20 µm et de préférence entre 3 µm et 8 µm.

10. Dispositif d'application selon l'une des revendications précédentes et en particulier selon l'une des revendications 5 à 9, **caractérisé en ce que** le rapport entre le volume du matériau céramique et le volume de l'agent propulseur gazeux est compris entre 1 : 5 et 5 : 1, de préférence entre 1 : 1 et 5 : 1 et en particulier entre 1 : 1 et 2 : 1.

11. Procédé d'application d'un matériau céramique dentaire en forme de suspension, de préférence d'un matériau dentaire opaque, sur un soubassement, en particulier sur une structure de dent éventuellement prétraitée,
**caractérisé en ce que**
le matériau céramique est appliqué à l'aide d'une bombe de pulvérisation.

12. Procédé selon la revendication 11, **caractérisé en ce que** l'application du matériau céramique s'effectue par un faisceau de pulvérisation de petite ouverture angulaire, l'ouverture angulaire d'application étant < 20° et de préférence comprise entre 5° et 20°.

13. Procédé selon l'une des revendications 1 et 12, **caractérisé en ce que** la structure de dent est une structure métallique.
